# EUROPEAN PATENT SPECIFICATION

(11) **EP 3 512 728 B1**
(45) Date of publication and mention of the grant of the patent: **11.11.2020**
(21) Application number: 17771838.4
(22) Date of filing: 13.09.2017
(51) Int. Cl.: B60K 1/02, B60K 11/02, H02K 5/20

(54) **COOLING ELECTRIC MOTORS IN A VEHICLE DRIVETRAIN APPARATUS**
KÜHLUNG VON ELEKTROMOTOREN IN EINER FAHRZEUGANTRIEBSVORRICHTUNG
REFROIDISSEMENT DE MOTEURS ÉLECTRIQUES DANS UN APPAREIL DE TRANSMISSION DE VÉHICULE

(30) Priority: 15.09.2016 GB 201615678
(43) Date of publication of application: 24.07.2019
(73) Proprietor: Arrival Limited, Banbury, Oxfordshire OX16 2SN (GB)
(72) Inventor: FOROSTOVSKY, Gregory, Banbury Oxfordshire OX16 2SN (GB)
(74) Representative: Korenberg, Alexander Tal
(86) International application number: PCT/GB2017/052690
(87) International publication number: WO 2018/051079

(56) References cited:
- US-A- 5 845 731
- US-A1- 2014 228 167
- US-A1- 2016 039 277

## Description

### Field

This specification relates to cooling electric motors in an electric drivetrain apparatus of a vehicle.

### Background

Electrically powered vehicles generally contain one or more electric motors for driving the wheels of the vehicle. The electric motors produce heat during use and thus can be susceptible to significant increases in temperature. Temperature increases of this kind can be undesirable and so the electric motors may benefit from a degree of active cooling in the vehicle.
US 2014/0228167 A1 discloses four-wheel drive powertrain configurations for two-motor, two-clutch hybrid electric vehicles. One powertrain comprises: a prime mover; an electric motor-generator, said electric motor-generator mechanically coupled to said prime mover via a first clutch; an electric motor, said electric motor mechanically coupled to said electric motor-generator via a second clutch; a battery, said battery electrically coupled to said electric motor-generator and said electric motor, said battery capable of supplying electrical energy to said electric motor-generator and said electric motor; and a controller, said controller capable of supplying control signals to said prime mover, said first clutch, said electric motor-generator, said second clutch and said electric motor such that said controller is capable of dynamically affecting a plurality of operating modes; wherein further said plurality of operating modes comprises one of a group, said group comprising: all electric mode, series mode, series-parallel mode and parallel mode.
US 5,845,731 A discloses a hybrid powertrain system for a motor vehicle.

### Summary

Aspects of the invention are set out in the independent claims.

This specification provides a drivetrain apparatus for an electrically powered vehicle as defined by the features of claim 1, comprising: a first electric motor; a second electric motor; a first cooling fluid inlet at an exterior of the apparatus; a first cooling fluid outlet at the exterior of the apparatus; and a cooling fluid channel between the cooling fluid inlet and the cooling fluid outlet, wherein the cooling fluid channel comprises a first section in the second electric motor and a second section in the first electric motor.

A first section of the cooling fluid channel is directly fluidly connected to the second section of the cooling fluid channel at an interior location of the drivetrain apparatus.

The first section of the cooling fluid channel may be arranged to receive cooling fluid from the first cooling fluid inlet.

The second section of the cooling fluid channel may be arranged to receive cooling fluid from the first section of the cooling fluid channel.

The second section of the cooling fluid channel may be arranged to return the cooling fluid to the first cooling fluid outlet.

The first section of the cooling fluid channel may comprise a second cooling fluid outlet; the second section of the cooling fluid channel may comprise a second cooling fluid inlet; and the second cooling fluid outlet may be aligned with the second cooling fluid inlet to allow cooling fluid to pass directly from the second cooling fluid outlet into the second cooling fluid inlet.

Optionally, the second cooling fluid inlet and the second cooling fluid outlet are not located at the exterior of the apparatus.

The first section of the cooling fluid channel may comprise a fluid path between the first cooling fluid inlet and the second cooling fluid outlet.

The second section of the cooling fluid channel may comprise a third cooling fluid outlet; the first section of the cooling fluid channel may comprise a third cooling fluid inlet; and the third cooling fluid outlet may be aligned with the third cooling fluid inlet to allow cooling fluid to pass directly from the third cooling fluid outlet into the third cooling fluid inlet.

Optionally, the third cooling fluid inlet and the third cooling fluid outlet are not located at the exterior of the apparatus.

The first section of the cooling fluid channel may comprise a fluid path between the third cooling fluid inlet and the first cooling fluid outlet.

The first electric motor may comprise a first face; the second electric motor may comprise a first face which faces the first face of the first electric motor; the second cooling fluid outlet may be located on the first face of the second electric motor; and the second cooling fluid inlet may be located on the first face of the first electric motor.

The third cooling fluid outlet may be located on the first face of the first electric motor; and the third cooling fluid inlet may be located on the first face of the second electric motor.

The drivetrain apparatus may comprise a cooling fluid seal located between the first face of the first electric motor and the first face of the second electric motor.

The cooling fluid seal may comprise a gasket in which a first aperture is aligned with the second cooling fluid outlet and the second cooling fluid inlet.

The gasket may comprise a second aperture aligned with the third cooling fluid outlet and the third cooling fluid inlet.

The first section of the cooling fluid channel may be arranged to cool at least a stator of the second electric motor.

The second section of the cooling fluid channel may be arranged to cool at least a stator of the first electric motor.

The first cooling fluid inlet and the first cooling fluid outlet may be located on an exterior surface of one of the first and second motors.

The first cooling fluid inlet may be fluidly connected to an outlet of a heat exchanger.

The first cooling fluid outlet may be fluidly connected to an inlet of the heat exchanger.

A rotatable output of the first electric motor may be mechanically coupled to a rotatable input of the second electric motor.

A rotatable output of the second electric motor may be mechanically coupled to a rotatable input of at least one gearbox.

The at least one gearbox may be arranged to drive at least one wheel of a vehicle.

This specification provides a vehicle comprising at least one battery apparatus and at least one drivetrain apparatus referred to above, wherein the at least one battery apparatus is arranged to supply electrical power to the at least one drivetrain apparatus.

For the purposes of example only, embodiments are described below with reference to the accompanying figures in which:

### Brief Description of the Figures

Figure 1 is a schematic illustration of an electrically powered vehicle comprising first and second electric drivetrain apparatuses;
Figure 2a is a schematic illustration of an electric drivetrain apparatus in a partially disassembled state;
Figure 2b is a schematic illustration of an electric drivetrain apparatus in an assembled state;
Figure 3 is a perspective illustration of an electric motor of an electric drivetrain apparatus;
Figure 4 is a schematic illustration of a thermal management apparatus for managing the temperatures of first and second electric motors in an electric drivetrain apparatus;
Figure 5 is a schematic illustration of cooling fluid channels in first and second electric motors of an electric drivetrain apparatus; and
Figure 6 is a schematic illustration of a seal apparatus, in the form of a gasket, for providing a cooling fluid seal between first and second electric motors of an electric drivetrain apparatus.

### Detailed Description

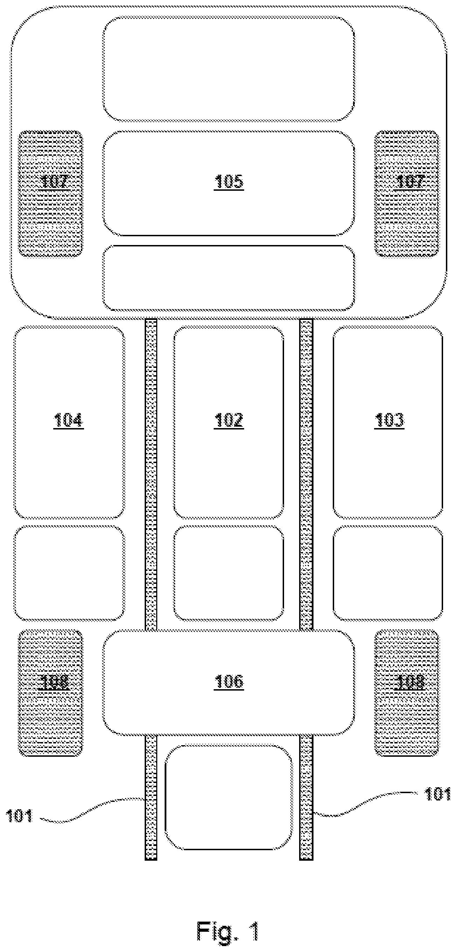

A schematic illustration of an electrically powered vehicle 100 is shown in figure 1. The vehicle 100 may be a car, such a high performance sports car or an off-road car. Alternatively, the vehicle 100 may be a commercial vehicle, such as a truck or a bus. As will be explained below, it is desirable in vehicles of these types to supply more torque to the wheels of the vehicle than might be supplied in lighter and/or less high performance vehicles. In the context of an electric drivetrain apparatus, such increases in torque supply can be implemented using an arrangement in which a plurality of electric motors are coupled to a single output, such as a single gearbox, which is used to drive one or more of the wheels of the vehicle. An arrangement of this type is described below. Whilst such an arrangement of coupled motors can produce a significant increase in output torque, the motors also produce additional excess heat in the drivetrain apparatus. In this context, the arrangement described below is configured so that the temperatures of the motors and the surrounding components of the vehicle can be managed in an efficient manner whilst optimising the packaging of the drivetrain apparatus.

Referring to Figure 1, the vehicle 100 comprises a plurality of apparatuses installed within a chassis 101 of the vehicle 100. In the example of Figure 1, the apparatuses include first and second high-voltage battery apparatuses 102, 103 and a range extender apparatus 104. Alternative configurations are, however, possible and are discussed further below. The skilled person will appreciate that the nominal voltages of the first and second battery apparatuses 102, 103 will vary in dependence on the specific batteries chosen for the vehicle 100. However, as an example, the first and second high-voltage battery apparatuses 102, 103 may each have a nominal voltage in a range between 250V and 750V.

The plurality of apparatuses installed in the chassis 101 also includes at least one electric drivetrain apparatus. For example, the vehicle 100 shown in Figure 1 includes a first drivetrain apparatus 105, located towards the front end of the vehicle 100, and a second drivetrain apparatus 106, located towards the rear end of the vehicle 100. The first drivetrain apparatus 105 drives the front wheels 107 of the vehicle 100 in order to cause forward/rearward motion of the vehicle 100. The second drivetrain apparatus 106 drives the rear wheels 108 of the vehicle 100 to cause corresponding forward/rearward motion.

The first and second drivetrain apparatuses 105, 106 receive electrical power from the battery apparatuses 102, 103, for example via a power inverter apparatus (not shown). It will be appreciated that this drains the electrical energy stored in the battery apparatuses 102, 103. The draining of energy from the battery apparatuses 102, 103 can be counteracted by the range extender apparatus 104, which is configured to supply electrical energy to the battery apparatuses 102, 103 for re-charging. For example, the range extender apparatus 104 may comprise an internal combustion engine. The internal combustion engine can be of any suitable type, powered by combustion of any suitable fuel e.g. petrol, diesel, LPG. A mechanical output of the combustion engine may be connected to an electrical power-generating unit (not shown in figure 1), which may include an alternator, in order to supply electrical energy to the battery apparatuses 102, 103.

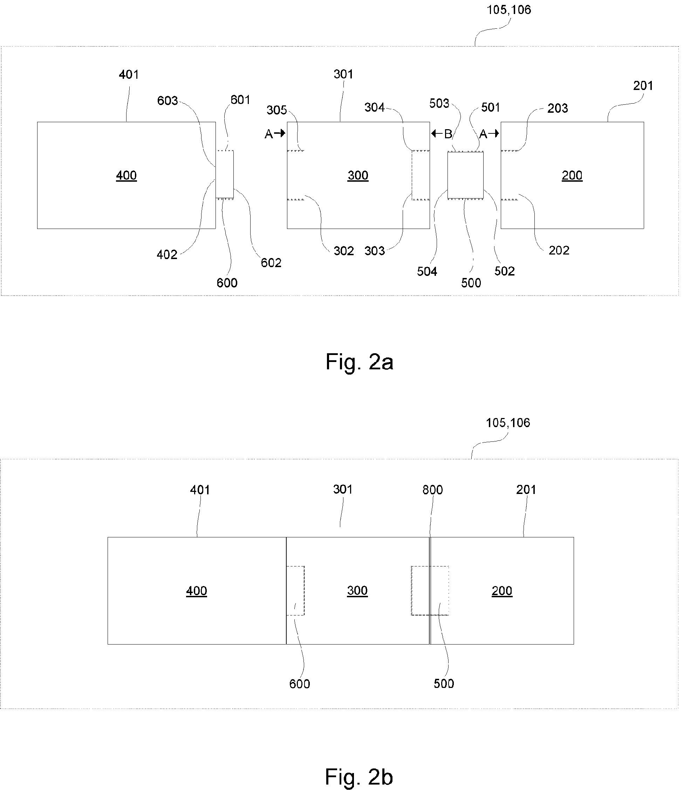

Figures 2a and 2b show an example of the first and/or second electric drivetrain apparatus 105, 106 referred to above. Figure 2a shows the drivetrain apparatus 105, 106 in a partially disassembled state, whilst Figure 2b shows the drivetrain apparatus 105, 106 in an assembled state.

Referring first to Figure 2a, the apparatus 105, 106 comprises a first electric motor 200, a second electric motor 300 and a gearbox 400. Each of the motors 200, 300 and the gearbox 400 comprises an external casing 201, 301, 401. Moving parts of the motors 200, 300 and the gearbox 400 are configured to be mechanically coupled together to create the assembled electric drivetrain apparatus 105, 106 shown in Figure 2b. In particular, the gearbox 400 is mechanically coupled to outputs of the first and second motors 200, 300 to receive rotational energy from both of the first and second motors 200, 300. As described below, mechanical couplings between rotating outputs of the motors 200, 300 and a rotatable input of the gearbox 400 cause rotation in the gearbox 400.

As shown in Figure 2a, the first motor 200 and the second motor 300 each comprises a rotatable output region 202, 302. These output regions 202, 302 are attached to the rotors (not shown) of the respective first and second motors 200, 300. The output region 202 of the first motor 200 is located at a first end A of the first motor 200, whereas the output region 302 of the second motor 300 is located at a first end A of the second motor 300. The output region 202 of the first motor 200 is configured to be coupled to a rotatable input region 303 of the second motor 300, which is located at a second end B of the second motor 300, using a first driveshaft 500. The output region 302 of the second motor 300 is configured to be coupled to a rotatable input region 402 of the gearbox 400 using a second driveshaft 600.

In detail, as schematically shown in Figure 2a, the rotatable output region 202 of the first motor 200 may comprise a plurality of female splines 203 which are caused to rotate by activation of the first motor 200. These female splines 203 are engageable with a plurality of corresponding male splines 501 at a first end 502 of the first driveshaft 500. This facilitates rotation of the first driveshaft 500 by the first motor 200. In particular, engagement between the female splines 203 of the motor output region 202 and the male splines 501 of the first driveshaft 500 causes the first driveshaft 500 to rotate with the motor output region 202.

The rotatable input region 303 of the second motor 300 also comprises a plurality of female splines 304. These female splines 304 are engageable with a plurality of corresponding male splines 503 at a second end 504 of the first driveshaft 500 referred to above. It will be appreciated that when the first driveshaft 500 is engaged with both the output region 202 of the first motor 200 and the input region 303 of the second motor 300, torque from the first motor 200 is transferred to the second motor 300 via the driveshaft 500. In the second motor 300, the rotatable input region 303 and the rotatable output region 302 are mechanically coupled together so that rotation of the input region 303 causes corresponding rotation of the output region 302. This allows torque to be transferred from the output region 202 of the first motor 200 to the output region 302 of the second motor 300, via the first driveshaft 500 and the mechanical coupling between the input and output regions 303, 302 of the second motor 300.

In a similar manner to the rotatable output region 202 of the first motor 200 referred to above, the rotatable output region 302 of the second motor 300 comprises a plurality of female splines 305. These female splines 305 are engageable with a plurality of corresponding male splines 601 at a first end 602 of the second driveshaft 600. This facilitates rotation of the second driveshaft 600 by the second motor 300. In particular, engagement between the female splines 305 of the motor output region 302 and the male splines 601 of the second driveshaft 600 causes the second driveshaft 600 to rotate with the motor output region 302.

A second end 603 of the second driveshaft 600 is mechanically coupled to the rotatable input region 402 of the gearbox 400. For example, the second end 603 of the second driveshaft 600 may be fixedly connected to the input region 402 of the gearbox 400 using one or more bolts or other attachments. Alternatively, male splines at the second end 603 of the second driveshaft 600 may be engaged with female splines at the input region 402 of the gearbox, in a similar manner to the spline-based engagements already described above.

It will be appreciated that when the first end 602 of the second driveshaft 600 is engaged with the output region 302 of the second motor 300, rotation of the motor output region 302 causes torque from the second motor 300 to be transferred to the gearbox 400 via the driveshaft 600.

When the first and second motors 200, 300 are run together, the overall effect of the above-described arrangement is for torque from both the first motor 200 and the second motor 300 to be transferred to the input region 402 of the gearbox 400. For example, in the case where the first and second motors 200, 300 are of the same type, the magnitude of the torque output to the gearbox 400 by the coupled first and second motors 200, 300 may be substantially double the magnitude of the torque that would be output to the gearbox 400 by one of the first and second motors 200, 300 if used alone. The result is a more powerful drivetrain apparatus 105, 106 which can be used in vehicles 100 where more torque is required, such as high performance cars or heavy commercial vehicles. For example, each motor 200, 300 may have an output power of approximately 80kW and the combined output power of the coupled motors 200, 300 may be approximately 160kW.

In addition to the mechanical couplings between the rotatable input and output regions of the motors 200, 300 and the gearbox 400, the assembled drivetrain apparatus 105, 106 also comprises mechanical couplings between the casings 201, 301, 401 referred to above. These couplings fixedly connect one or more regions of the casing 201 at the first end A of the first motor 200 to one or more regions of the casing 301 at the second end B of the second motor 300. Similarly, the couplings fixedly connect one or more regions of the casing 301 at the first end A of the second motor 300 to one or more regions of the casing 401 of the gearbox 400. The couplings may, for example, comprise one or more bolts which cooperate with one or more corresponding apertures in the casings 201, 301, 401 to attach the casings 201, 301, 401 together.

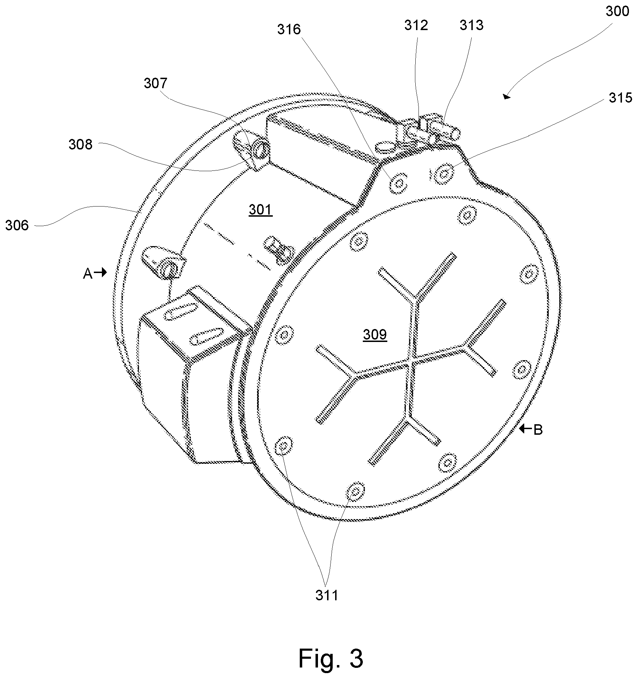

A perspective illustration of the second motor 300 is shown in Figure 3. As can be seen, the casing 301 of the motor 300 is approximately cylindrical in shape and comprises a substantially circular flange 306 at its first end A. The flange 306 comprises a plurality of apertures 307 around its circumference, through which a plurality of bolts 308 can be inserted to attach the casing 301 at the first end A of the second motor 300 to the casing 401 of the gearbox 400 using a corresponding plurality of apertures in the gearbox casing 401.

For clarity of illustration, the rotatable input region 303 at the second end B of the second motor 300 is illustrated in Figure 3 as being covered by a protective cover 309. The protective cover 309 is attached to the casing 301 of the second motor 300 by a plurality of removable fixings, such as a plurality of bolts which extend through a plurality of apertures 311 in the cover 309 into a corresponding plurality of apertures at the second end B of the motor 300. When the cover 309 is removed, these apertures at the second end B of the second motor 300 may be used to fixedly attach the casing 301 at the second end B of the second motor 300 to the casing 201 at the first end A of the first motor 200.

As schematically shown in Figure 2b, when the drivetrain apparatus 105, 106 is assembled, the first end A of the casing 201 of the first motor 200 substantially abuts the second end B of the casing 301 of the second motor 300. Similarly, the first end A of the casing 301 of the second motor 300 abuts the casing 401 of the gearbox 400.

As outlined above, when in use, the assembled drivetrain apparatus 105, 106 produces a significant amount of heat energy. This heat energy can be caused by various factors, including electrical characteristics of the first and second motors 200, 300 and mechanical friction. The heat energy produced in the motors 200, 300 dissipates into the various components of the motors 200, 300, including the stators, the casings 201, 301, and other components of the drivetrain apparatus 105, 106. This increases the temperature of the motors 200, 300 and may also increase the temperature of the surrounding components of the drivetrain apparatus 105, 106, including the gearbox 400 and the first and second driveshafts 500, 600.

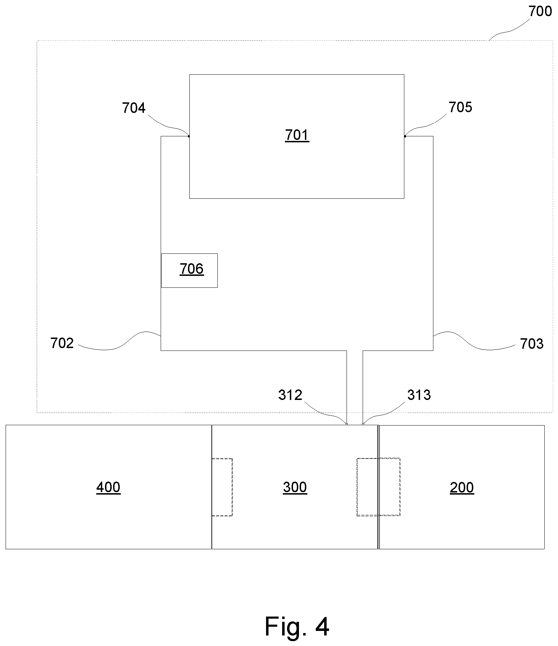

In order to prevent any undesirable effects of high temperatures in the drivetrain apparatus 105, 106, the vehicle 100 comprises a thermal management apparatus 700 to manage the temperature of the electric motors 200, 300 in the drivetrain apparatus 105, 106. The thermal management apparatus 700, which is schematically illustrated in Figure 4, comprises a heat exchanger 701, a feed channel 702 for feeding cooling fluid such as water from the heat exchanger 701 to the electric motors 200, 300 and a return channel 703 for returning the cooling fluid from the electric motors 200, 300 to the heat exchanger 701. The heat exchanger 701 may, for example, comprise one or more radiators for reducing the temperature of cooling fluid received at the heat exchanger 701 from the return channel 703.

The feed and return channels 702, 703 may each be implemented in the form of a flexible pipe connected between the heat exchanger 701 and the motors 200, 300. In particular, referring to Figures 3 and 4, the cooling fluid feed channel 702 may comprise a pipe connected between a cooling fluid inlet port 312 of the second motor 300 and a cooling fluid outlet port 704 of the heat exchanger 701. Similarly, the cooling fluid return channel 703 may comprise a pipe connected between a cooling fluid outlet port 313 of the second motor 300 and a cooling fluid inlet port 705 of the heat exchanger 701. In operation, cooling fluid passes in a circuit from the outlet port 704 of the heat exchanger to the inlet port 312 of the second motor 300 through the feed channel 702. The cooling fluid passes through the second motor 300, where it is warmed by heat energy produced by the second motor 300, before passing directly into the first motor 200, where it is further warmed by heat energy produced by the first motor 200. The cooling fluid then returns directly to the second motor 300, where it is directed out of the outlet port 313 of the second motor 300 and back to the inlet port 705 of the heat exchanger 701 through the return channel 703. At the heat exchanger 701, the cooling fluid is cooled before passing back out of the outlet port 704. This completes the cooling fluid circuit.

In order to control the rate of flow of the cooling fluid through the circuit described above, the thermal management apparatus 700 comprises a cooling fluid pump 706. The cooling fluid pump 706 is configured to pump the cooling fluid around the circuit, between the heat exchanger 701 and the motors 200, 300. The rate at which the cooling fluid is pumped through the circuit may be controlled by varying the output power of the pump 706. For example, the first and second motors 200, 300 may each comprise at least one temperature sensor (not shown) which are configured to sense the temperatures of the motors 200, 300 and communicate the sensed temperatures to a controller (not shown) of the thermal management apparatus 700. The controller may, in dependence of the sensed temperatures of the motors 200, 300, control the speed of the pump 706 to increase or decrease the rate of cooling at the motors 200, 300 in order to maintain the temperatures of the motors 200, 300 within a predetermined temperature range.

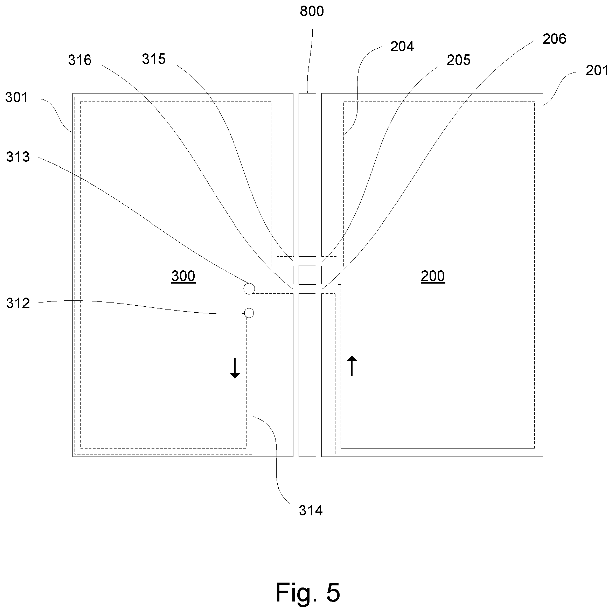

Referring to Figure 5, the first and second motors 200, 300 each comprises a cooling fluid channel for channeling cooling fluid through the interiors of the first and second motors 200, 300. The cooling fluid channels are configured to supply cooling fluid to cool the internal components of the motors 200, 300, as well as the motor casings 201, 301. These components may, for example, include the spators of the motors 200, 300.

In particular, as shown in Figure 5, the second motor 300 comprises a first section of cooling fluid channel 314 which extends from the inlet port 312 described above to an outlet aperture 315 in the casing 301. As shown in Figure 3, the outlet aperture 315 is not at the circumferential surface of the motor casing 301 but is instead located at the second end B of the motor 300 in a region of the casing 301 which faces the first end A of the first motor 200. The path of the cooling fluid channel 314 between the inlet port 312 and the outlet aperture 315 may pass around the circumference of the motor casing 301 so as to collect heat energy from the motor 300 in an effective manner. For example, the cooling fluid channel 314 may comprise a series of loops around the casing 301 of the motor 300 so as to extend the length of the channel 314 and thereby increase the volume of cooling fluid present in the channel 314 at any one time.

The second motor 300 also comprises a cooling fluid inlet aperture 316. As with the outlet aperture 315 described above, the inlet aperture 316 is not at the circumferential surface of the motor casing 301 but is instead located at the second end B of the motor 300 in a region of the casing 301 which faces the first end A of the first motor 200. The inlet aperture 316 may, for example, be located side-by-side with the outlet aperture 315, as shown in Figure 3.

Referring back to Figure 5, the first motor 200 comprises a second section of cooling fluid channel 204. The cooling fluid channel 204 of the first motor 200 extends from an inlet aperture 205 in the casing 201 of the first motor 200 to an outlet aperture 206 in the casing 201 of the first motor 200. The inlet aperture 205 and the outlet aperture 206 are not at the circumferential surface of the motor casing 201 but are instead located at the first end A of the first motor 200 in a region of the casing 201 which faces the second end B of the second motor 300. The apertures 205, 206 may, for example, be located side-by-side, as with the inlet and outlet apertures 316, 315 of the first section of cooling channel 314 discussed above with respect to Figure 3. In a similar manner to the cooling fluid channel 314 of the second motor 300 described above, the path of the cooling fluid channel 204 between the inlet aperture 205 and the outlet aperture 206 of the first motor 200 may pass around the circumference of the first motor casing 201 so as to collect heat energy from the first motor 200 in an effective manner. For example, the cooling fluid channel 204 may comprise a series of loops around the casing 201 of the first motor 200 so as to extend the length of the channel 204 and thereby increase the volume of cooling fluid present in the channel 204 at any one time.

As shown in Figure 5, the outlet aperture 315 of the cooling fluid channel 314 of the second motor 300 is aligned with the inlet aperture 205 of the cooling fluid channel 204 of the first motor 200. The alignment between the first and second motors 200, 300 is such that cooling fluid exits the cooling fluid channel 314 of the second motor 300 and passes directly into the cooling fluid channel 204 of the first motor 200 via the aligned outlet and inlet apertures 315, 205 of the two motors 200, 300. In corresponding fashion, the outlet aperture 206 of the cooling fluid channel 204 of the first motor 200 is aligned with the inlet aperture 316 of the cooling fluid channel 314 of the second motor 300. The alignment between the first and second motors 200, 300 is therefore such that cooling fluid exits the cooling fluid channel 204 of the first motor 200 and passes directly into the cooling fluid channel 314 of the second motor 300, via the aligned outlet and inlet apertures 206, 316 of the two motors 200, 300.

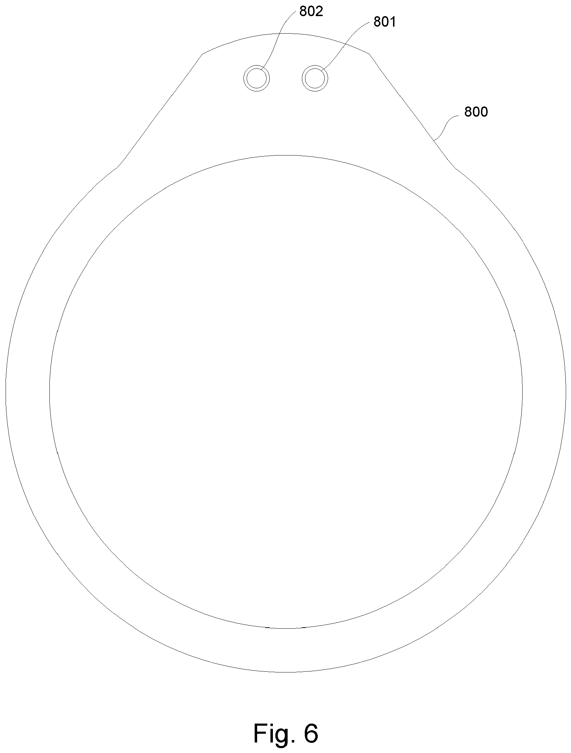

Referring to Figure 2b, Figure 5 and Figure 6, the electric drivetrain apparatus 105, 106, when assembled, comprises a seal apparatus 800 located between the first end A of the first motor 200 and the second end B of the second motor 300. An example seal apparatus 800 is a suitable gasket, shaped to match the first end A of the first motor 200 and the second end B of the second motor 300. As shown in Figure 6, the seal apparatus 800 comprises a first aperture 801 and a second aperture 802. In the assembled drivetrain apparatus 105, 106, the first aperture 801 of the seal apparatus 800 is aligned with the outlet aperture 315 of the cooling fluid channel 314 of the second motor 300 and the inlet aperture 205 of the cooling fluid channel 204 of the first motor 200. The second aperture 802 of the seal apparatus 800 is aligned with the outlet aperture 206 of the cooling fluid channel 204 of the first motor 200 and the inlet aperture 316 of the cooling fluid channel 314 of the second motor 300. The seal apparatus 800, in this way, ensures a cooling fluid-tight seal between the aligned apertures 315, 205, 206, 316 of the cooling fluid channels 314, 204 of the first and second motors 200, 300 and thereby ensures that cooling fluid passing between the apertures 315, 205, 206, 316 does not leak from the drivetrain apparatus 105, 106 when passing out of one motor 200, 300 and into the other.

As described above and illustrated in Figures 4 and 5, the drivetrain apparatus 105 comprises a single cooling fluid inlet port 312 and a single cooling fluid outlet port 313 at the exterior of the drivetrain apparatus 105, 106. In the examples described above, these inlet and outlet ports 312, 313 are located on the exterior of the second motor casing 301. However, it will be appreciated that the inlet port 312 and the outlet port 313 could alternatively be located on the exterior of the first motor 200, with cooling fluid being fed directly to the interior of the second motor 300 via apertures in the ends A, B of the first and second motors 200, 300 respectively. Another alternative is for the inlet port 312 to be located on the exterior of the second motor 300 and the outlet port 313 to be located on the exterior of the first motor 200, or vice versa. In all of these alternatives, the exterior inlet port 312 is configured to supply cooling fluid to both of the first and second motors 200, 300. This means that separate cooling fluid inlet ports on the exteriors of the two motors 200, 300 are not required. Similarly, in all of the alternatives, the exterior outlet port 313 is configured to return to the heat exchanger 701 cooling fluid from both of the first and second motors 200, 300. This means that separate cooling fluid outlet ports on the exteriors of the two motors 200, 300 are also not required. Furthermore, the single inlet and outlet ports 312, 313 mean that, in the thermal management apparatus 700, a single cooling fluid feed channel 702 and a single cooling fluid return channel 703 can be used to thermally manage both of the first and second motors 200, 300 in the drivetrain apparatus 105, 106.

These aspects of the drivetrain apparatus 105, 106 have significant advantages in terms of packaging the drivetrain apparatus 105, 106 and the thermal management apparatus 700 in the vehicle 100. Where space in the vehicle 100 is limited, the reduction in exterior components facilitated by the above aspects of the drivetrain apparatus 105, 106 mean that the drivetrain apparatus 105, 106 can be installed in smaller spaces in the vehicle 100. Furthermore, the reduction in the number of cooling fluid inlet and outlet ports 312, 313 on the exterior of the drivetrain apparatus 105, 106 means that the apparatus 105, 106 can be more easily and more rapidly installed in the vehicle 100. This is because there are fewer connections between feed/return pipes and inlet/outlet ports to make upon installation. Also the drivetrain apparatus 105, 106 is more robust and reliable, especially at installation. This is because of the minimization of exterior inlet and outlet ports; fewer inlet and outlet ports means that disruption of the supply/return of cooling fluid to/from the motors 200, 300 is less likely to be caused by accidental damage or knocks to the inlet/outlet ports 312, 313 and/or the feed/return channels 702, 703.

It will be appreciated that reducing the number of exterior inlet and outlet ports 312, 313 and feed/return channels 702, 703 may have further advantages in terms of reduced cost of manufacture, because fewer components are required.

It will also be appreciated that various modifications can be made to the examples described above without departing from the scope of the claims appended hereto. For example, although the vehicle 100 shown in Figure 1 includes two high-voltage battery apparatuses 102, 103 and a range extender apparatus 104, the vehicle 100 may alternatively comprise a single battery apparatus and no range extender apparatus. The skilled person will appreciate that further modifications are possible in this regard.

## Claims

1. A drivetrain apparatus (105,106) for an electrically powered vehicle (100), comprising:
a first electric motor (200);
a second electric motor (300);
a first cooling fluid inlet (312) at an exterior of the apparatus;
a first cooling fluid outlet (313) at the exterior of the apparatus; and
a cooling fluid channel between the cooling fluid inlet and the cooling fluid outlet, wherein the cooling fluid channel comprises a first section (314) in the second electric motor and a second section (204) in the first electric motor, and **characterised in that** the first section of the cooling fluid channel is directly fluidly connected to the second section of the cooling fluid channel at an interior location of the drivetrain apparatus.

2. A drivetrain apparatus according to claim 1, wherein:
the first section of the cooling fluid channel comprises a second cooling fluid outlet;
the second section of the cooling fluid channel comprises a second cooling fluid
inlet; and
the second cooling fluid outlet is aligned with the second cooling fluid inlet to allow cooling fluid to pass directly from the second cooling fluid outlet into the second cooling fluid inlet.

3. A drivetrain apparatus according to claim 2, wherein the second cooling fluid inlet and the second cooling fluid outlet are not located at the exterior of the apparatus.

4. A drivetrain apparatus according to claim 2 or 3, wherein the first section of the cooling fluid channel comprises a fluid path between the first cooling fluid inlet and the second cooling fluid outlet.

5. A drivetrain apparatus according to any of claims 2 to 4, wherein:
the second section of the cooling fluid channel comprises a third cooling fluid outlet;
the first section of the cooling fluid channel comprises a third cooling fluid inlet; and
the third cooling fluid outlet is aligned with the third cooling fluid inlet to allow cooling fluid to pass directly from the third cooling fluid outlet into the third cooling fluid inlet.

6. A drivetrain apparatus according to claim 5, wherein the third cooling fluid inlet
and the third cooling fluid outlet are not located at the exterior of the apparatus.

7. A drivetrain apparatus according to claim 5 or 6, wherein the first section of the cooling fluid channel comprises a fluid path between the third cooling fluid inlet and the first cooling fluid outlet.

8. A drivetrain apparatus according to any of claims 5 to 7, wherein:
the first electric motor comprises a first face;
the second electric motor comprises a first face which faces the first face of
the
first electric motor;
the second cooling fluid outlet is located on the first face of the second electric motor; and
the second cooling fluid inlet is located on the first face of the first electric motor.

9. A drivetrain apparatus according to claim 8, wherein:
the third cooling fluid outlet is located on the first face of the first electric motor; and
the third cooling fluid inlet is located on the first face of the second electric motor.

10. A drivetrain apparatus according to claim 8 or 9, comprising a cooling fluid seal (800) located between the first face of the first electric motor and the first face of the second electric motor.

11. A drivetrain apparatus according to claim 10, wherein the cooling fluid seal comprises a gasket in which a first aperture (801) is aligned with the second cooling fluid outlet and the second cooling fluid inlet.

12. A drivetrain apparatus according to claim 11, wherein the gasket comprises a second aperture (802) aligned with the third cooling fluid outlet and the third cooling fluid inlet.

13. A drivetrain apparatus according to any preceding claim, wherein the first cooling fluid inlet and the first cooling fluid outlet are located on an exterior surface of one of the first and second motors.

14. A drivetrain apparatus according to any preceding claim, wherein a rotatable output (202) of the first electric motor is mechanically coupled to a rotatable input (303) of the second electric motor.

15. A vehicle comprising at least one battery apparatus (102, 103) and at least one drivetrain apparatus according to any preceding claim, wherein the at least one battery apparatus is arranged to supply electrical power to the at least one drivetrain apparatus.

## Patentansprüche

1. Antriebsstrangvorrichtung (105, 106) für ein elektrisch angetriebenes Fahrzeug (100), Folgendes umfassend:
einen ersten Elektromotor (200);
einen zweiten Elektromotor (300);
einen ersten Kühlfluideinlass (312) an einer Außenseite der Vorrichtung;
einen ersten Kühlfluidauslass (313) an der Außenseite der Vorrichtung; und
einen Kühlfluidkanal zwischen dem Kühlfluideinlass und dem Kühlfluidauslass, wobei der Kühlfluidkanal einen ersten Abschnitt (314) im zweiten Elektromotor und einen zweiten Abschnitt (204) im ersten Elektromotor umfasst, und **dadurch gekennzeichnet, dass** der erste Abschnitt des Kühlfluidkanals an einer innenliegenden Stelle der Antriebsstrangvorrichtung mit dem zweiten Abschnitt des Kühlfluidkanals direkt fluidisch gekoppelt ist.

2. Antriebsstrangvorrichtung nach Anspruch 1, wobei:
der erste Abschnitt des Kühlfluidkanals einen zweiten Kühlfluidauslass umfasst;
der zweite Abschnitt des Kühlfluidkanals einen zweiten Kühlfluideinlass umfasst; und
der zweite Kühlfluidauslass mit dem zweiten Kühlfluideinlass ausgerichtet ist, um zuzulassen, dass Kühlfluid vom zweiten Kühlfluidauslass direkt in den zweiten Kühlfluideinlass verläuft.

3. Antriebsstrangvorrichtung nach Anspruch 2, wobei sich der zweite Kühlfluideinlass und der zweite Kühlfluidauslass nicht auf der Außenseite der Vorrichtung befinden.

4. Antriebsstrangvorrichtung nach Anspruch 2 oder 3, wobei der erste Abschnitt des Kühlfluidkanals einen Fluidweg zwischen dem ersten Kühlfluideinlass und dem zweiten Kühlfluidauslass umfasst.

5. Antriebsstrangvorrichtung nach einem der Ansprüche 2 bis 4, wobei:
der zweite Abschnitt des Kühlfluidkanals einen dritten Kühlfluidauslass umfasst;
der erste Abschnitt des Kühlfluidkanals einen dritten Kühlfluideinlass umfasst; und
der dritte Kühlfluidauslass mit dem dritten Kühlfluideinlass ausgerichtet ist, um zuzulassen, dass Kühlfluid vom dritten Kühlfluidauslass direkt in den dritten Kühlfluideinlass verläuft.

6. Antriebsstrangvorrichtung nach Anspruch 5, wobei sich der dritte Kühlfluideinlass und der dritte Kühlfluidauslass nicht auf der Außenseite der Vorrichtung befinden.

7. Antriebsstrangvorrichtung nach Anspruch 5 oder 6, wobei der erste Abschnitt des Kühlfluidkanals einen Fluidweg zwischen dem dritten Kühlfluideinlass und dem ersten Kühlfluidauslass umfasst.

8. Antriebsstrangvorrichtung nach einem der Ansprüche 5 bis 7, wobei:
der erste Elektromotor eine erste Seite umfasst;
der zweite Elektromotor eine erste Seite umfasst, die der ersten Seite des ersten Elektromotors zugewandt ist;
sich der zweite Kühlfluidauslass auf der ersten Seite des zweiten Elektromotors befindet; und
sich der zweite Kühlfluideinlass auf der ersten Seite des ersten Elektromotors befindet.

9. Antriebsstrangvorrichtung nach Anspruch 8, wobei:
sich der dritte Kühlfluidauslass auf der ersten Seite des ersten Elektromotors befindet; und
sich der dritte Kühlfluideinlass auf der ersten Seite des zweiten Elektromotors befindet.

10. Antriebsstrangvorrichtung nach Anspruch 8 oder 9, eine Kühlfluiddichtung (800) umfassend, die sich zwischen der ersten Seite des ersten Elektromotors und der ersten Seite des zweiten Elektromotors befindet.

11. Antriebsstrangvorrichtung nach Anspruch 10, wobei die Kühlfluiddichtung eine Flachdichtung umfasst, in der eine erste Öffnung (801) mit dem zweiten Kühlfluidauslass und dem zweiten Kühlfluideinlass ausgerichtet ist.

12. Antriebsstrangvorrichtung nach Anspruch 11, wobei die Flachdichtung eine zweite Öffnung (802) umfasst, die mit dem dritten Kühlfluidauslass und dem dritten Kühlfluideinlass ausgerichtet ist.

13. Antriebsstrangvorrichtung nach einem der vorstehenden Ansprüche, wobei sich der erste Kühlfluideinlass und der erste Kühlfluidauslass auf einer Außenfläche des ersten oder zweiten Motors befinden.

14. Antriebsstrangvorrichtung nach einem der vorstehenden Ansprüche, wobei ein drehbarer Ausgang (202) des ersten Elektromotors mechanisch mit einem drehbaren Eingang (303) des zweiten Elektromotors gekoppelt ist.

15. Fahrzeug, mindestens eine Batterievorrichtung (102, 103) und mindestens eine Antriebsstrangvorrichtung nach einem der vorstehenden Ansprüche umfassend, wobei die mindestens eine Batterievorrichtung dazu angeordnet ist, die mindestens eine Antriebsstrangvorrichtung mit elektrischem Strom zu versorgen.

## Revendications

1. Appareil de transmission (105, 106) pour un véhicule électrique (100), comprenant :
un premier moteur électrique (200) ;
un second moteur électrique (300) ;
une première entrée de fluide de refroidissement (312) à l'extérieur de l'appareil ;
une première sortie de fluide de refroidissement (313) à l'extérieur de l'appareil ; et
un canal de fluide de refroidissement entre l'entrée de fluide de refroidissement et la sortie de fluide de refroidissement, le canal de fluide de refroidissement comprenant une première section (314) dans le second moteur électrique et une seconde section (204) dans le premier moteur électrique, et **caractérisé en ce que** la première section du canal de fluide de refroidissement est en communication fluidique directe avec la seconde section du canal de fluide de refroidissement à un emplacement intérieur de l'appareil de transmission.

2. Appareil de transmission selon la revendication 1 :
la première section du canal de fluide de refroidissement comprenant une deuxième sortie de fluide de refroidissement ;
la seconde section du canal de fluide de refroidissement comprenant une deuxième entrée de fluide de refroidissement ; et
la deuxième sortie de fluide de refroidissement étant alignée avec la deuxième entrée de fluide de refroidissement pour permettre au fluide de refroidissement de passer directement de la deuxième sortie de fluide de refroidissement à la deuxième entrée de fluide de refroidissement.

3. Appareil de transmission selon la revendication 2, la deuxième entrée de fluide de refroidissement et la deuxième sortie de fluide de refroidissement n'étant pas situées à l'extérieur de l'appareil.

4. Appareil de transmission selon la revendication 2 ou 3, la première section du canal de fluide de refroidissement comprenant un chemin de fluide entre la première entrée de fluide de refroidissement et la deuxième sortie de fluide de refroidissement.

5. Appareil de transmission selon l'une quelconque des revendications 2 à 4 :
la seconde section du canal de fluide de refroidissement comprenant une troisième sortie de fluide de refroidissement ;
la première section du canal de fluide de refroidissement comprenant une troisième entrée de fluide de refroidissement ; et
la troisième sortie de fluide de refroidissement étant alignée avec la troisième entrée de fluide de refroidissement pour permettre au fluide de refroidissement de passer directement de la troisième sortie de fluide de refroidissement à la troisième entrée de fluide de refroidissement.

6. Appareil de transmission selon la revendication 5, la troisième entrée de fluide de refroidissement et la troisième sortie de fluide de refroidissement n'étant pas situées à l'extérieur de l'appareil.

7. Appareil de transmission selon la revendication 5 ou 6, la première section du canal de fluide de refroidissement comprenant un chemin de fluide entre la troisième entrée de fluide de refroidissement et la première sortie de fluide de refroidissement.

8. Appareil de transmission selon l'une quelconque des revendications 5 à 7 :
le premier moteur électrique comprenant une première face ;
le second moteur électrique comprenant une première face qui fait face à la première face du premier moteur électrique ;
la deuxième sortie du fluide de refroidissement étant située sur la première face du second moteur électrique ; et
la deuxième entrée de fluide de refroidissement étant située sur la première face du premier moteur électrique.

9. Appareil de transmission selon la revendication 8 :
la troisième sortie de fluide de refroidissement étant située sur la première face du premier moteur électrique ; et
la troisième entrée de fluide de refroidissement étant située sur la première face du second moteur électrique.

10. Appareil de transmission selon la revendication 8 ou 9, comprenant un joint de fluide de refroidissement (800) situé entre la première face du premier moteur électrique et la première face du second moteur électrique.

11. Appareil de transmission selon la revendication 10, le joint de fluide de refroidissement comprenant un joint d'étanchéité dans lequel une première ouverture (801) est alignée avec la deuxième sortie de fluide de refroidissement et la deuxième entrée de fluide de refroidissement.

12. Appareil de transmission selon la revendication 11, le joint d'étanchéité comprenant une seconde ouverture (802) alignée avec la troisième sortie de fluide de refroidissement et la troisième entrée de fluide de refroidissement.

13. Appareil de transmission selon l'une quelconque des revendications précédentes, la première entrée de fluide de refroidissement et la première sortie de fluide de refroidissement étant situées sur une surface extérieure de l'un des premier et second moteurs.

14. Appareil de transmission selon l'une quelconque des revendications précédentes, une sortie rotative (202) du premier moteur électrique étant accouplée mécaniquement à une entrée rotative (303) du second moteur électrique.

15. Véhicule comprenant au moins un appareil à batterie (102, 103) et au moins un appareil de transmission selon l'une quelconque des revendications précédentes, l'au moins un appareil à batterie étant conçu pour fournir de l'énergie électrique à l'au moins un appareil de transmission.
